# DEMANDE DE BREVET EUROPEEN

(11) **EP 1 870 287 A1**
(43) Date de publication de la demande: **26.12.2007**
(21) Numéro de dépôt: 07301080.3
(22) Date de dépôt: 31.05.2007
(51) Int. Cl.: B60R 11/06

(54) **Boîtier d'outillage logé dans la roue de secours d'un véhicule automobile**

(30) Priorité: 20.06.2006 FR 0652560
(71) Demandeur: Peugeot Citroen Automobiles SA, 78943 Vélizy-Villacoublay Cedex (FR)
(72) Inventeur: Wong Kong Tao, M. David, 25200, MONTBELIARD (FR)
(74) Mandataire: Vigand, Régis Louis Michel

(57) **Abrégé**

Boîtier d'outillage 1 pour véhicule automobile agencé dans une roue de secours 7 disposée sous le plancher 9 du véhicule composé d'un corps de forme générale rectangulaire dont la longueur axiale est sensiblement égale au diamètre de la jante 5 de la roue de secours dans lequel il est disposé de telle manière que le fond dudit corps soit sensiblement dans le plan de ladite roue.

Deux patins 24 sont disposés de part et d'autre du corps du boîtier et s'étendent selon une direction perpendiculaire à la direction axiale dudit boîtier. La semelle de chaque patin 24 est coplanaire au fond du corps du boîtier de façon à venir en appui avec celui-ci sur le sol.

## Description

L'invention concerne un boîtier d'outillage pour véhicule automobile agencé dans une roue de secours disposée sous le plancher de ce véhicule.

On connaît des agencements de ce type dans lesquels le boîtier d'outillage est disposé dans la jante de la roue de secours. L'ensemble ainsi constitué est fixé sous le plancher du véhicule. Un filin actionné par un treuil assure la descente et la remontée de cet ensemble lorsqu'il est nécessaire de remplacer une des roues du véhicule.

L'invention se rapporte plus particulièrement aux agencements dans lesquels le boîtier d'outillage est disposé sous la roue de secours. Dans ce cas la stabilité de l'ensemble, notamment pendant la phase de remontée du treuil dépend beaucoup de la configuration de ce boîtier. Celui-ci est généralement rectangulaire, étant donné qu'il contient essentiellement le cric, il a donc tendance à se renverser surtout si le sol sur lequel il est posé n'est pas plan, comme cela est souvent le cas. Le boîtier se déplace alors de son axe par rapport à la roue de secours et se retrouve décalé. En butée sous le plancher, l'ensemble n'est plus maintenu correctement, ce qui génère des bruits sous la caisse du véhicule.

Le but de l'invention est donc de proposer un boîtier d'outillage dont l'agencement dans la roue de secours permette d'augmenter la stabilité de l'ensemble.

A cet effet, la présente invention a pour objet un boîtier d'outillage pour véhicule automobile agencé dans une roue de secours disposée sous le plancher du véhicule composé d'un corps de forme générale rectangulaire dont la longueur axiale est sensiblement égale au diamètre de la jante de la roue de secours dans lequel il est disposé de telle manière que le fond dudit corps soit sensiblement dans le plan de ladite roue.

Selon l'invention, deux patins sont disposés de part et d'autre du corps du boîtier et s'étendent selon une direction perpendiculaire à la direction axiale dudit boîtier.

De préférence, l'ensemble constitué par le corps de boîtier et les deux patins présente une forme en croix dans le plan défini par ladite direction axiale dudit boîtier et par ladite direction perpendiculaire.

Selon d'autres caractéristiques avantageuses de l'invention :
■ La semelle de chaque patin est coplanaire au fond du corps du boîtier de façon à venir en appui avec celui-ci sur le sol.
■ La longueur de chaque patin est telle que le bord libre du patin soit en appui sur la face interne circulaire de la jante de la roue.
■ Le profil du bord libre est arrondi pour mieux s'adapter à la forme de la paroi de la jante.
■ Une paroi concave assure le raccordement du bord libre au corps du boîtier.
■ Le profil de la paroi concave est complémentaire de celui du pneu de la roue du véhicule de façon à pouvoir servir de cale à ladite roue.
■ Les patins sont venus de forme avec le boîtier.
■ Les patins sont fixés sur le boîtier par rivetage.
■ Les patins sont fixés sur le boîtier par vissage.
■ L'un au moins des patins est fixé de façon amovible sur le corps du boîtier.
■ la fixation amovible est constituée d'au moins une coulisse en queue d'aronde coopérant avec un rail de forme conjuguée pratiqués respectivement dans le flanc du boîtier et dans le flanc en regard du patin.
■ les flancs du boîtier et du patin, en regard, portent, respectivement, des protubérances coopérant avec des dépressions afin d'assurer le maintien en place du patin.

D'autres caractéristiques et avantages de l'invention apparaîtront clairement à la lecture de la description ci-après, donnée à titre indicatif en référence aux dessins annexés dans lesquels :
- La figure 1 est une vue de dessous d'un boîtier selon l'invention
- La figure 2 est une vue de dessus dudit boîtier
- La figure 3 est une vue de côté dudit boîtier
- La figure 4 est une vue en perspective de l'ensemble boîtier et roue de secours
- Et la figure 5 est une vue partielle, vue de dessus, de la partie centrale de l'ensemble selon la figure 4.

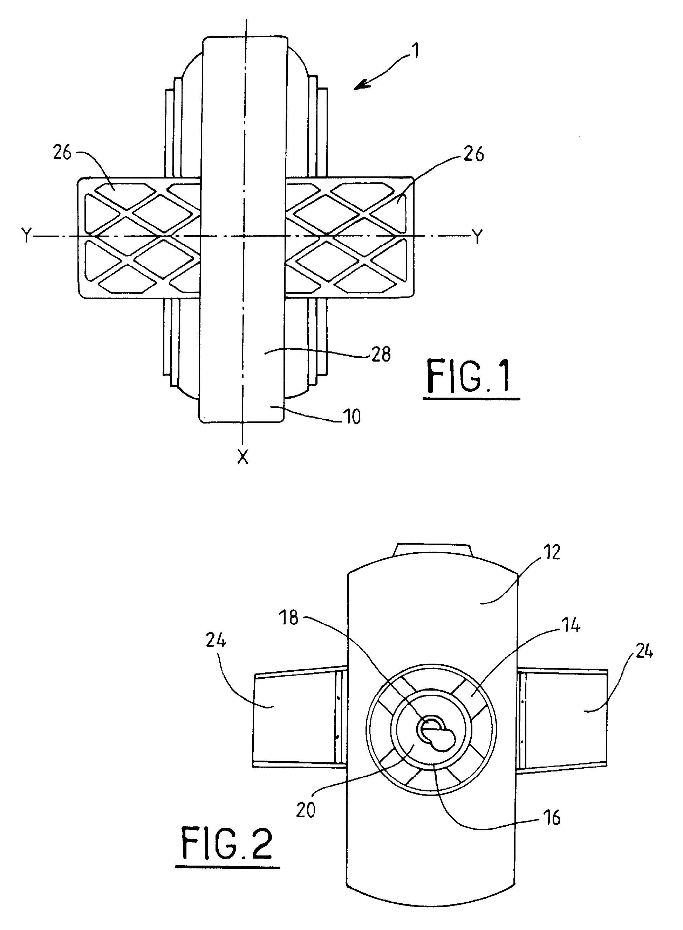

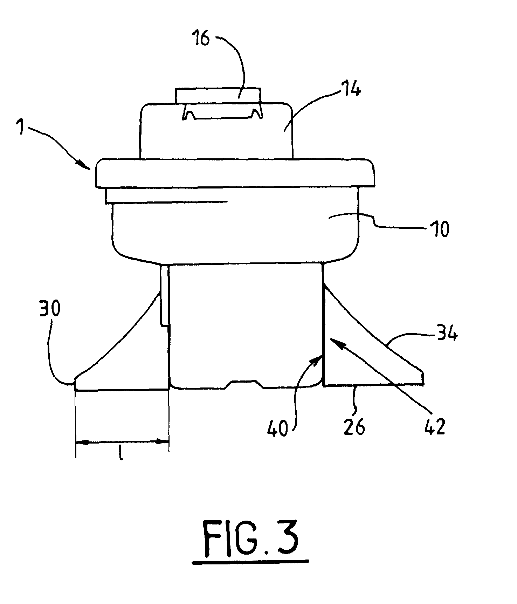

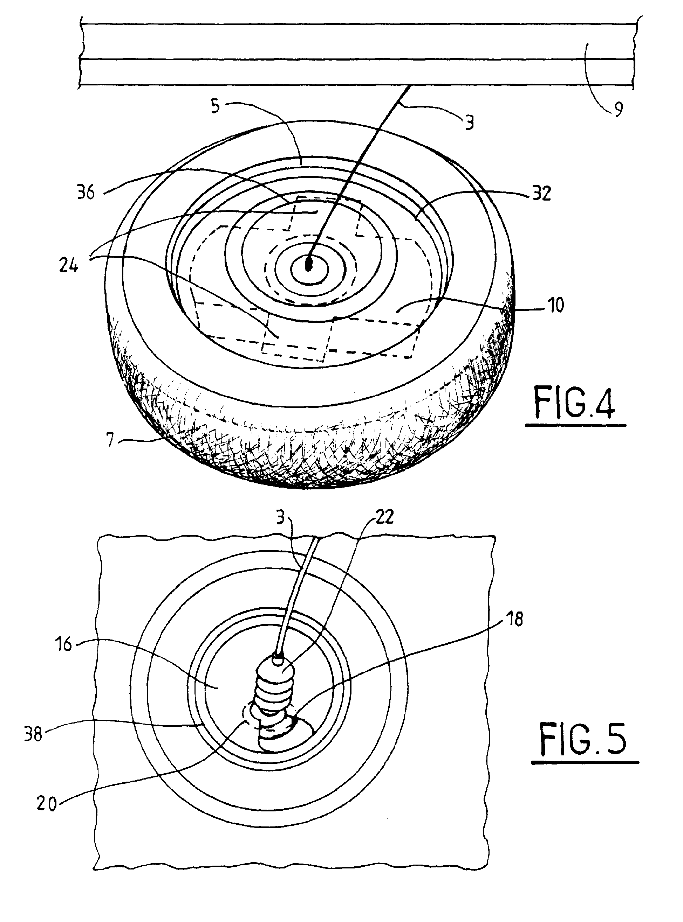

Comme on le voit sur les figures 1 à 3, le boîtier d'outillage 1 , selon l'invention est composé d'un corps 10 de forme générale rectangulaire dont la longueur, selon son axe X est sensiblement égale au diamètre de la jante 5 de la roue de secours 7 dans lequel il est disposé (figure 4).

Il comporte un couvercle 12 muni en son centre d'une calotte 14 sensiblement hémisphérique dont la forme et les dimensions sont adaptées pour que ladite calotte soit contenue dans le fond concave de la jante 5 de la roue de secours 7.

Une cuvette 16 concentrique à la calotte 14 est percée d'une lumière 18 munie à sa périphérie d'un crochet 20 destinés à recevoir et à maintenir l'embout 22 d'un filin 3 (figure 4) du treuil de manoeuvre (non représenté) de l'ensemble roue de secours 7 et boîtier d'outillage 1.

Selon l'invention, deux patins 24 sont disposés de part et d'autre du corps 10 du boîtier 1 et s'étendent selon un axe Y perpendiculaire à la direction axiale X dudit boîtier.

Ces patins sont venus de forme avec le boîtier ou fixés sur celui-ci par rivetage, vissage ou tout moyen approprié. La semelle 26 de chaque patin est coplanaire au fond 28 du corps 10 du boîtier 1 de façon à venir en appui avec celui-ci sur le sol. Sa longueur ℓ est telle que le bord libre 30 du patin soit en appui sur la face interne circulaire 32 de la jante 5. De préférence le profil de ce bord est arrondi pour mieux s'adapter à la forme de la paroi de la jante.

Le raccordement du bord libre 30 au corps 10 du boîtier se fait au moyen d'une paroi concave 34 afin de minimiser le poids de l'ensemble tout en conservant une prise importante sur le côté du boîtier. En outre cette forme permet d'utiliser le patin en tant que cale de roue lors du montage de la roue de secours.

Comme on le voit bien sur la figure 4, lorsque la roue de secours est installée sous le plancher 9 du véhicule, elle se présente avec la face convexe 36 de la jante en regard dudit plancher.

Le boîtier d'outillage 1 est logé en dessous de la roue, à l'intérieur de la partie circulaire de la jante. La calotte 14 de son couvercle 12 s'adapte dans le fond concave de celle-ci de sorte que la cuvette 16 concentrique à la calotte 14 soit en regard de l'ouverture centrale 38 de la jante, comme on le voit mieux sur la figure 5.

L'embout 22 du filin 3 relié au treuil de manoeuvre est engagé dans le crochet 20 équipant la lumière 18 de la cuvette 16.

Lorsque l'on manoeuvre le treuil pour faire descendre la roue de secours, on voit que celle-ci repose sur le boîtier d'outillage, le fond 28 du corps du boîtier et la semelle 26 des patins étant en contact avec le sol en fin de descente. La forme en croix du boîtier déterminé par l'axe X du corps du boîtier et par l'axe Y des patins assure la stabilité de l'ensemble et empêche son basculement aussi bien dans les phases de descente et de remontée que dans les manipulations au sol. En outre cette forme permet un parfait emboîtement dans la jante ce qui empêche les bruits provoqués par un maintien incorrect.

En variante, l'un au moins des patins 24 peut être fixé de façon facilement amovible sur le corps 10 du boîtier afin de permettre de le désolidariser de celui-ci lorsqu'il est utilisé comme cale de roue.

Cette fixation peut-être constituée d'au moins une coulisse en queue d'aronde coopérant avec un rail de forme conjuguée pratiqués respectivement dans le flanc 40 du boîtier et dans le flanc 42 en regard du patin.

Ces flancs en regard peuvent également porter, respectivement, des protubérances coopérant avec des dépressions afin d'assurer le maintien en place du patin.

Bien entendu l'invention n'est pas limité au mode de réalisation décrit et représenté. En particulier, dans ledit mode de réalisation, la manoeuvre de l'ensemble est réalisée à l'aide d'un treuil. Ceci n'est pas limitatif tout autre système permettant d'accéder à la roue de secours est envisageable, comme, par exemple, un panier basculant.

## Revendications

1. Boîtier d'outillage (1) pour véhicule automobile agencé dans une roue de secours (7) disposée sous le plancher (9) du véhicule composé d'un corps (10) de forme générale rectangulaire dont la longueur, selon son axe (X) est sensiblement égale au diamètre de la jante (5) de la roue de secours (7) dans lequel il est disposé de telle manière que le fond (28) dudit corps soit sensiblement dans le plan du pneu de ladite roue,
**caractérisé en ce que** deux patins (24) sont disposés de part et d'autre du corps (10) du boîtier (1) et s'étendent selon une direction (*Y*) perpendiculaire à la direction axiale (X) dudit boîtier.

2. Boîtier d'outillage selon la revendication 1 ,
**caractérisé en ce que** la semelle (26) de chaque patin (24) est coplanaire au fond (28) du corps (10) du boîtier de façon à venir en appui avec celui-ci sur le sol.

3. Boîtier d'outillage selon la revendication 2,
**caractérisé en ce que** la longueur (ℓ) de chaque patin est telle que le bord libre (30) du patin soit en appui sur la face interne circulaire (32) de la jante (5).

4. Boîtier d'outillage selon la revendication 3
**caractérisé en ce que** le profil du bord libre (30) est arrondi pour mieux s'adapter à la forme de la paroi de la jante.

5. Boîtier d'outillage selon la revendication 3 ou 4,
**caractérisé en ce qu'**une paroi concave (34) assure le raccordement du bord libre (30) au corps (10) du boîtier.

6. Boîtier d'outillage selon la revendication 5,
**caractérisé en ce que** le profil de la paroi concave (34) est complémentaire de celui du pneu de la roue du véhicule de façon à pouvoir servir de cale à ladite roue.

7. Boîtier d'outillage selon l'une des revendications 3 à 6,
**caractérisé en ce que** les patins sont venus de forme avec le boîtier.

8. Boîtier d'outillage selon l'une des revendications 3 à 6,
**caractérisé en ce que** les patins sont fixés sur le boîtier par rivetage.

9. Boîtier d'outillage selon l'une des revendications 3 à 6,
**caractérisé en ce que** les patins sont fixés sur le boîtier par vissage.

10. Boîtier d'outillage selon la revendication 6,
**caractérisé en ce que** l'un au moins des patins (24) est fixé de façon amovible sur le corps (10) du boîtier.

11. Boîtier d'outillage selon la revendication 10,
**caractérisé en ce que** la fixation amovible est constituée d'au moins une coulisse en queue d'aronde coopérant avec un rail de forme conjuguée pratiqués respectivement dans le flanc (40) du boîtier et dans le flanc (42) en regard du patin.

12. Boîtier d'outillage selon la revendication 10 ou 11 ,
**caractérisé en ce que** les flancs (40) du boîtier et du patin (42) en regard portent, respectivement, des protubérances coopérant avec des dépressions afin d'assurer le maintien en place du patin.

13. Boîtier d'outillage selon l'une des revendications précédentes, **caractérisé en ce que** l'ensemble constitué par le corps (10) de boîtier et les deux patins (24) présente une forme en croix dans le plan défini par ladite direction axiale (X) dudit boîtier et par ladite direction perpendiculaire (Y).
